# EUROPÄISCHE PATENTSCHRIFT

(11) **EP 1 963 696 B1**
(45) Veröffentlichungstag und Bekanntmachung des Hinweises auf die Patenterteilung: **24.07.2013**
(21) Anmeldenummer: 06827965.2
(22) Anmeldetag: 21.12.2006
(51) Int. Cl.: F16C 33/62, F16C 19/18, F16C 19/52

(54) **WÄLZLAGER MIT TEMPERATURGESTEUERTER VORSPANNUNGSVERSTELLUNG FÜR RAUMFAHRTANWENDUNGEN**
ROLLER BEARING HAVING TEMPERATURE-CONTROLLED PRESTRESSING ADJUSTMENT FOR SPACE FLIGHT PURPOSES
PALIER DE ROULEMENT DOTÉ D'UN AJUSTEMENT A PRÉCONTRAINTE ASSERVI À LA TEMPÉRATURE POUR APPLICATIONS SPATIALES

(30) Priorität: 21.12.2005 AT 20462005
(43) Veröffentlichungstag der Anmeldung: 03.09.2008
(73) Patentinhaber: RUAG Space GmbH, 1120 Wien (AT)
(72) Erfinder: FALKNER, Manfred, A-2722 Winzendorf (AT); NEUGEBAUER, Christian, A-1020 Wien (AT)
(74) Vertreter: Keschmann, Marc
(86) Internationale Anmeldenummer: PCT/AT2006/000537
(87) Internationale Veröffentlichungsnummer: WO 2007/070911

(56) Entgegenhaltungen:
- DE-A1- 19 845 877
- JP-A- 8 014 252
- JP-A- 2000 186 719
- US-A1- 6 158 895

## Beschreibung

Die Erfindung bezieht sich auf ein Wälzlager mit zwischen Lagerringen in zwei Reihen aufgenommenen Wälzkörpern bzw. Kugeln.

Wälzlager werden je nach Beanspruchung üblicherweise in definierter Weise vorgespannt, wobei die Vorspannung des Wälzlagers einen spielfreien Betrieb des Lagers unter der jeweils erwarteten Last ermöglichen soll. Die Wahl der vorspannung dient hierbei der Minimierung des Verschleißes und bei korrekter Optimierung auch der Aufrechterhaltung der Schmierung sowie der Verminderung des Verschleißes des Lagers.

Bei beweglichen Teilen von Mechanismen auf Trägerraketen, Sonden oder Satelliten werden Wälzlager eingesetzt. Hierbei ist zu beachten, dass beim Starten von Raumfahrzeugen erhebliche statische, dynamische und Schocklasten auftreten, sodass die Belastung von Wälzlagern beim Start von jener im Betrieb grundsätzlich verschieden ist. Die Wälzlager müssten die mechanischen Lasten, die beim Start auftreten, übertragen und werden aus diesem Grunde relativ hoch vorgespannt oder aus dem Lastpfad ausgekoppelt. Die gelagerten Mechanismen sind während des Starts üblicherweise nicht in Betrieb.

Während des Betriebs im Weltraum herrschen gänzlich andere Bedingungen. Zum einen befinden sich die gelagerten Produkte im Zustand der Schwerelosigkeit, wobei lediglich geringe Vibrationen und kaum mechanische Lasten übertragen werden müssen. Wälzlager, welche im Weltall im Einsatz sind, sollen sich durch eine möglichst hohe Lebensdauer bei hoher Genauigkeit und geringes Reibmoment auszeichnen und erfordern somit eine möglichst geringe Vorspannung, wobei im Zustand der Schwerelosigkeit sogar eine spielbehaftete Lagerung Vorteile bieten kann.

Bei der Auskopplung von gelagerten Bauteilen aus dem Lastpfad während des Startvorganges wird der gelagerte Bauteil mechanisch mit dem Raumfahrzeug verbunden. Die Verbindung des gelagerten Bauteiles mit dem Raumfahrzeug erfolgt dabei derart, dass das Wälzlager beispielsweise durch federnde Elemente oder durch Ausklinken einer Verbindung aus dem Lastpfad ausgekoppelt wird. Nach dem Start wird die feste Verbindung gelöst, wobei dies beispielsweise durch mechanisches Auftrennen mittels einer Zündung von Treibsätzen oder durch Abschmelzen eines Drahtes erfolgen kann, worauf der gelagerte Bauteil nur noch durch das Lager getragen wird. Derartige Treibsätze bzw. nicht explodierende Lösevorrichtungen führen zu einem zusätzlichen Entwicklungsaufwand und einer erhöhten Masse solcher Systeme.

Die EP 1262676 zeigt und beschreibt eine aktuatorbetätigte Vorspannungsabsenkung. Ein derartiger Aktuator weist naturgemäß eine zusätzliche Masse auf, und es ist für die Betätigung des Aktuators zusätzlicher Aufwand zu betreiben.

Bei geringen Anforderungen an die Lager kann auch mit einer gleichbleibenden Vorspannung das Auslangen gefunden werden. Der Antrieb des Mechanismus muss aber dann auf diese, den Startlasten entsprechende Vorspannung ausgelegt werden, worauf in der Folge ein höherer Energiebedarf für den Antrieb des Mechanismus und eine geringere Lebensdauer von Lager und Schmierung aufgrund der permanenten mechanischen Belastung durch die Vorspannung eintritt.

Aus der US-A1-6 158 895 ist ein Wälzlager für rotierende Maschinenwerkzeuge bekannt geworden, bei welchem geteilte Lagerschalen zum Einsatz kommen, wobei in die Teilung der äußeren Lagerschale ein Material mit geringerem Thermalausdehnungskoeffizienten, z.B. Invar, eingelegt ist.

Aus der DE 198 45 877 A1 ist ein Wälzlager bekannt geworden, bei welchem auch bei einer aufgrund hoher Drehzahlen hervorgerufenen Erwärmung eine konstante Vorgabedruckkraft auf die Lager dadurch aufrecht erhalten wird, dass die thermischen Ausdehnungskoeffizienten einerseits eines Abstandsstücks zwischen den Laufspuren der Wälzlager und andererseits eines Rings, der zwischen dem Lagerring und der Laufspur und einem verbindungselement eingefügt ist, differenziert bemessen sind.

Die Erfindung zielt nun darauf ab, ein Wälzlager der eingangs genannten Art zu schaffen, welches insbesondere für Raumfahrtanwendungen geeignet ist und in der Lage ist, beim Starten eines Raumfahrzeuges die hohen axialen und radialen Kräfte sowie Momente normal auf die Rotationsachse des Wälzlagers sicher zu übertragen und in der Folge im Betrieb beim übertragen wesentlich geringerer axialer und radialer Kräfte sowie Momente ein geringeres Reibmoment aufweist und während der gesamten Einsatzdauer des Mechanismus hohe Präzision bei geringer Masse gewährleistet und das ohne externe Aktuatoren, daher passiv arbeitet. Zur Lösung dieser Aufgabe ist das erfindungsgemäße Wälzlager im Wesentlichen dadurch gekennzeichnet, dass in einen inneren Lagerring in Umfangsrichtung verlaufend Segmente in Nuten oder im Fall von geteilten Lagerringen in eine Teilung eingelegt sind, deren Material (z.B. Invar) eine geringere Thermalausdehnung als das Material des innenrings zur Behinderung eines axialen Schrumpfens bei Abkühlung aufweist. Bei dieser Konstruktion wird den besonderen Gegebenheiten der Raumfahrt optimal Rechnung getragen. Während der Start üblicherweise bei Raumtemperatur erfolgt, erfolgt der Betrieb bei wesentlich tieferen Temperaturen und insbesondere bei kryogenen Temperaturen von beispielsweise von 20 bis 40 K (Kelvin). Durch die entsprechende Wahl der Werkstoffe mit unterschiedlichen thermischen Ausdehnungskoeffizienten gelingt es nun, die Deformation von Innen- und Außenring lediglich durch Temperaturveränderungen zu ändern, wobei die Lagervorspannung während des Starts höher gewählt wird als während des Betriebs, was durch entsprechende unterschiedliche Schrumpfungen der Materialien erfolgen kann. Der Innenring des Lagers kann somit mit Werkstoffen mit unterschiedlicher thermischer Dehnung versehen sein, sodass insgesamt entweder das axiale Schrumpfen des Innenrings behindert oder geringer gewählt wird als das Schrumpfen des Außenrings, sodass sich die Distanz von Laufbahnen ändern kann und die Lagervorspannung bei abnehmender Temperatur reduziert wird. Zu diesem zweck ist mit Vorteil die Ausbildung so getroffen, dass Lagerringe mit voneinander verschiedenen Werkstoffen mit unterschiedlicher thermischer Dehnung ausgebildet sind.

Prinzipiell ist der Einsatz von Materialien unterschiedlicher Thermaldehnung im Innenring, im Außenring oder in beiden Ringen denkbar. Wenn Innenring und Außenring aus Materialien unterschiedlicher Thermaldehnung ausgeführt sind, lässt sich durch Temperaturänderung gleichfalls eine Änderung der Vorspannung erzielen.

Als Ringmaterialien kommen zum Beispiel AISI 52100, AISI 440C, Cronidur-30, oder XD-15 in Betracht.

Werden Kugeln und Ringe des Lagers aus Material unterschiedlicher Thermaldehnung ausgeführt, wird ebenfalls eine Änderung der Vorspannung bei Temperaturänderung des Lagers erzielt. Als Ringmaterial kommen zum Beispiel AISI 52100, AISI 440C, Cronidur-30 oder XD-15 in Betracht, als Kugelmaterial AISI 52100 oder AISI 440C.

Die Erfindung wird nachfolgend anhand eines Ausführungsbeispieles eines derartigen Wälzlagers näher erläutert.

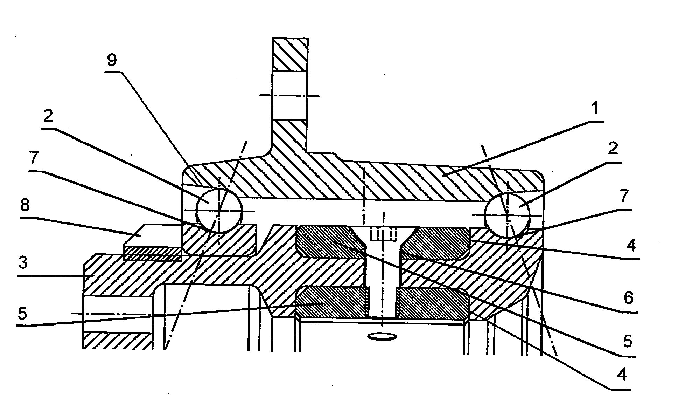

In der Zeichnung ist mit 1 ein Außenring aus Lagerstahl, beispielsweise aus dem Stahl AISI 440C bezeichnet. Die mit 2 bezeichneten Kugeln sind gleichfalls aus Lagerstahl AISI 440C ausgebildet. Bei der Ausbildung in der Zeichnung ist auch der Innenring aus dem gleichen Material gefertigt und mit 3 bezeichnet. Der Innenring weist Nuten 4 auf, in welche Segmente 5 eingelegt sind. Diese eingelegten bzw. eingesetzten Segmente bestehen nun aus einem Material geringerer Thermalausdehnung und beispielsweise aus Invar-36. Die Segmente können eingepresst oder eingelegt sein, wobei die Festlegung beispielsweise durch in Bohrungen 6 eingesetzte Schrauben erfolgen kann. Das Material geringerer Thermalausdehnung, nämlich Invar, behindert axiales Schrumpfen des Innenrings beim Abkühlen, wobei der Außenring 1 ungehindert schrumpfen kann. Auf diese Weise verändert sich aufgrund der Neigung der Laufbahn 9 die Distanz zwischen den Laufbahnen 7 und 9 und die Lagervorspannung wird reduziert. Die Lagervorspannung wird zu Beginn mittels einer Mutter 8 auf den für den Start gewünschten wesentlich höheren Wert eingestellt. Die Verwendung von vom Material der Ringe gesonderten segmenten erlaubt hierbei die Einstellung auf zwei Über einen extrem hohen Temperaturbereich verteilte Betriebspunkte, wie sie beispielsweise zwischen Starttemperatur und der Temperatur im Weltall vorliegen.

## Patentansprüche

1. Wälzlager mit zwischen Lagerringen in zwei Reihen aufgenommenen Wälzkörpern bzw. Kugeln (2), **dadurch gekennzeichnet, dass** in einen inneren Lagerring (3) in Umfangsrichtung verlaufend Segmente (5) in Nuten (4) oder im Fall von geteilten Lagerringen in eine Teilung eingelegt sind, deren Material, z.B. Invar, eine geringere Thermalausdehnung als das Material des Innenrings (3) zur Behinderung eines axialen Schrumpfens bei Abkühlung aufweist.

2. Wälzlager nach Anspruch 1, **dadurch gekennzeichnet, dass** der innere und der äußere Lagerring (1, 3) aus unterschiedlichen Werkstoffen mit unterschiedlicher thermischer Dehnung bestehen.

3. Wälzlager nach Anspruch 1 oder 2, **dadurch gekennzeichnet, dass** geteilte Lagerringe (1, 3) mit voneinander verschiedenen Werkstoffen mit unterschiedlicher thermischer Dehnung ausgebildet sind.

4. Wälzlager nach Anspruch 1, 2 oder 3, **dadurch gekennzeichnet, dass** die Wälzköper (2) und/oder ein äußerer Lagerring (1) bei sich ändernder Temperatur größere Schrumpfung aufweisen als ein innerer Lagerring (3).

5. Wälzlager nach einem der Ansprüche 1 bis 4, **dadurch gekennzeichnet, dass** die Lagerringmaterialien aus der Gruppe AISI 52100, AISI 440C, Cronidur-30 oder XD-15 ausgewählt sind.

6. Wälzlager nach einem der Ansprüche 1 bis 5, **dadurch gekennzeichnet, dass** als Material für die Wälzkörper bzw. Kugeln (2) AISI 52100 oder AISI 440C gewählt ist.

## Claims

1. A roller bearing with roller bodies or balls (2) received in two rows between bearing rings, **characterized in that** segments (5) are inserted in grooves (4), or between partitions in the case of split bearing rings, in an inner bearing ring (3) so as to be spread in the peripheral direction, the material of which segments, e.g, invar, has a lower thermal expansion than the material of the inner ring (3) for preventing axial shrinkage during cooling.

2. A roller bearing according to claim 1, **characterized in that** the inner and outer bearing rings (1, 3) are made of different materials having different thermal expansions.

3. A roller bearing according to claim 1 or 2, **characterized in that** split bearing rings (1, 3) made of different materials having different thermal expansions are provided.

4. A roller bearing according to claim 1, 2 or 3, **characterized in that** the roller bodies (2) and/or an outer bearing ring (1) exhibit higher shrinkage at varying temperatures than an inner bearing ring (3).

5. A roller bearing according to any one of claims 1 to 4, **characterized in that** the bearing ring materials are selected from the group consisting of AISI 52100, AISI 440C, Cronidur-30 or XD-15.

6. A roller bearing according to any one of claims 1 to 5, **characterized in that** AISI 52100 or AISI 440C is selected as the material for the roller bodies or balls (2).

## Revendications

1. Palier à roulement comportant des éléments roulants ou des billes (2) disposés en deux rangées entre des bagues de roulement, **caractérisé en ce que**, dans une bague de roulement intérieure (3), des segments (5), s'étendant dans la direction circonférentielle, sont insérés dans des gorges (4) ou, dans le cas de bagues de roulement en plusieurs parties, dans une fente de séparation, leur matériau, par exemple de l'invar, présentant une plus petite dilatation thermique que le matériau de la bague intérieure (3) afin d'éviter un retrait axial lors d'un refroidissement.

2. Roulement selon la revendication 1, **caractérisé en ce que** les bagues intérieure et extérieure (1, 3) du roulement sont faites de matériaux différents qui ont des dilatations thermiques différentes.

3. Palier à roulement selon la revendication 1 ou 2, **caractérisé en ce que** des bagues de roulement en plusieurs parties (1, 3) sont faites de matériaux différents l'un de l'autre qui ont des dilatations thermiques différentes.

4. Palier à roulement selon la revendication 1, 2 ou 3, **caractérisé en ce que** les éléments roulants (2) et/ou une bague extérieure de roulement (1) présentent un plus fort retrait qu'une bague intérieure de roulement (3) en présence d'une variation de la température.

5. Palier à roulement selon l'une des revendications 1 à 4, **caractérisé en ce que** les matériaux du roulement sont sélectionnés dans le groupe AISI 52100, AISI 440C, Cronidur-30 ou XD-15.

6. Palier à roulement selon l'une des revendications 1 à 5, **caractérisé en ce que** AISI 52100 ou AISI 440C est sélectionné comme matériau pour les éléments roulants ou les billes (2).
